# EUROPÄISCHE PATENTSCHRIFT

(11) **EP 1 448 345 B1**
(45) Veröffentlichungstag und Bekanntmachung des Hinweises auf die Patenterteilung: **30.03.2005**
(21) Anmeldenummer: 02787626.7
(22) Anmeldetag: 09.11.2002
(51) Int. Cl.: B27K 3/36

(54) **VERFAHREN ZUR HYDROPHOBIERUNG VON LIGNOCELLULOSEN BEI DER HERSTELLUNG VON HOLZWERKSTOFFEN UND AUS LIGNOCELLULOSEN BESTEHENDEM HOLZWERKSTOFF**
METHOD FOR RENDERING LIGNOCELLULOSES HYDROPHOBIC IN THE PRODUCTION OF WOODEN MATERIALS AND WOODEN MATERIAL MADE FROM LIGNOCELLULOSES
PROCEDE D'HYDROPHOBATION DE LIGNOCELLULOSES LORS DE LA FABRICATION DE MATERIAUX DE BOIS ET DE MATERIAUX A BASE DE LIGNOCELLULOSES

(30) Priorität: 30.11.2001 DE 10158891; 14.03.2002 DE 10211128
(43) Veröffentlichungstag der Anmeldung: 25.08.2004
(73) Patentinhaber: Sasol Wax GmbH, 20457 Hamburg (DE)
(72) Erfinder: BUCHHOLZ, Thomas, 21391 Reppenstedt (DE); ROFFAEL, Edmone, 38104 Braunschweig (DE)
(74) Vertreter: Müller, Enno, Dipl.-Ing.
(86) Internationale Anmeldenummer: PCT/EP2002/012540
(87) Internationale Veröffentlichungsnummer: WO 2003/045646

(56) Entgegenhaltungen:
- DE-A- 2 034 208

## Beschreibung

Die Erfindung betrifft zunächst ein Verfahren zur Hydrophobierung von Lignocellulosen, insbesondere Holzfasern, Holzspänen und Strands, bei der Herstellung von Holzwerkstoffen, wobei die Lignocellulosen mit einem Hydrophobierungsmittel auf Paraffinbasis versehen werden und danach, gegebenenfalls nach einem Trocknungsvorgang, zu einem Holzwerkstoff zusammengepreßt werden.

Weiter betrifft die Erfindung einen aus Lignocellulosen, insbesondere Holzfasern, Holzspänen oder Strands bestehenden Holzwerkstoff, vorzugsweise einer Holzfaserplatte wie mitteldichte (MDF) Faserplatte, wobei der Holzwerkstoff einen Anteil an Paraffin aufweist.

Holzwerkstoffe auf Basis von Lignocellulosen sind z.B. Holzfaserplatten, wie sie bereits in verschiedenen Ausgestaltungen bekannt geworden sind. Sie werden im Bauwesen in weitem Umfang, insbesondere beim Innenausbau, eingesetzt. Die Holzfaserplatten werden insbesondere hinsichtlich Dickenquellung, Wasseraufnahme, Biegefestigkeit und Querzugfestigkeit beurteilt. Hierzu existiert eine Vorschrift, die unter der Kurzbezeichnung EN 622-5 bekannt ist. Nachstehend wird hierauf Bezug genommen, wenn von geforderten Werten einer solchen Faserplatte gesprochen ist.

Zu der Hydrophobierung mit Paraffin ist eine Reihe von Untersuchungen bekannt. So ist auf den Aufsatz von Roffael, E., Schriever, E., May, H.-A., 1982 in Adhäsion 11, Seiten 10,13 bis 15 und 18 bis 19 "Hydrophobierung von Spanplatten mit Paraffin", Teil 1, zu verweisen, weiter auf einen Aufsatz derselben Autoren in WKI-Mitteilung 359 (Adhäsion 27, (4), 16 - 21) aus 1983 "Hydrophobierung von Spanplatten mit Paraffinen", Teil 2. Weiter auf die Veröffentlichung von zwei der genannten Autoren, H.-A. May und E. Roffael in WKI-Mitteilung 369 aus 1983 "Hydrophobierung von Spanplatten mit Paraffinen", Teil 3 ( Adhäsion 27 (9), 9-17) und die Veröffentlichungen von den letztgenannten Autoren in Adhäsion 1/2 aus 1984 "Hydrophobierung von Spanplatten mit Paraffinen", Teil 4 ( Adhäsion 28, (1,2), 17-22) bzw. WKI-Mitteilung 376/1984. Schließlich ist noch auf die von den Autoren E. Schriever und E. Roffael vorgenommene Veröffentlichung in WKI-Mitteilung 389/1984 (Adhäsion 28,(11), 13-18) "zur Analyse von Paraffinen in Spanplatten und in reiner Form" zu verweisen. Die genannten Untersuchungen beziehen sich auf aus Gatsche gewonnenes Paraffin. Hierbei hat man auch bereits eine Differenzierung hinsichtlich des Anteils an N-Alkanen und Iso-Paraffin vorgenommen (siehe insbesondere Hydrophobierung von Spanplatten mit Paraffinen, Teil 1 und 2 sowie Teil 4).

Danach war eine gewisse Verbesserung bei solchen aus Gatsche gewonnen Paraffinen festzustellen, welche höher molekulare Kohlenwasserstoffe und N-Paraffine aufweisen. Jedoch waren die letztlich erhaltenen Ergebnisse, insbesondere wenn man etwa die Dickenquellung über 24 Stunden betrachtet, nicht wesentlich unterschiedlich.

Die untersuchten Anteile an Paraffin bezogen auf die Trockenmasse an Holzspänen bezog sich auf eine Untergrenze von 0,3 % bis hin zu 1,2 %. Die mechanischen Eigenschaften, wie insbesondere Biegefestigkeit, zeigten fallweise mit zunehmendem Paraffingehalt eine, teilweise sehr deutliche, Abnahme (vgl. oben "Hydrophobierung von Spanplatten mit Paraffinen", Teil 4, insbesondere Abbildung 6).

Hiervon ausgehend beschäftigt sich die Erfindung mit der technischen Problematik, ein Verfahren zur Hydrophobierung von Lignocellulosen bei der Herstellung von Holzwerkstoffen bzw. einen aus Lignocellulosen bestehenden Holzwerkstoff anzugeben, wobei ein paraffinbasiertes Hydrohphobierungsmittel verwendet wird, das über eine gute Hydrophobierungswirkung verfügt und zugleich über einen größeren Zugabebereich möglichst positive Einflüsse, bei geringer Abweichung in Abhängigkeit von der tatsächlichen Zugabemenge, auf die mechanischen Eigenschaften des Holzwerkstoffes, hat.

Diese Aufgabe ist zunächst beim Gegenstand des Anspruches 1 gelöst, wobei darauf abgestellt ist, dass als Hydrophobierungsmittel zumindest teilweise FT-Paraffin verwendet wird.

Unter FT-Paraffin wird das durch eine Fischer-Tropsch-Synthese gewonnene Paraffin verstanden. FT-Paraffine bestehen vornehmlich nur aus Normal-Paraffinen. Mehr als 90 % sind gewöhnlich N-Alkane. Der Rest sind Iso-Alkane. Die Kettenlänge liegt bei C₂₀ bis etwa C₁₀₅, bei einer Gradation (Erstarrungspunkt, EP) von ca. 35° C bis ca. 105° C. Im Weiteren wird hierzu auch auf die Veröffentlichung von A. Kühnle in Fette, Seifen, Anstrichmittel 84. Jahrgang, Nr. 4, Seiten 156 bis 162 verwiesen.

Überraschend hat sich gezeigt, dass FT-Paraffin eine sehr gute Hydrophobierungswirkung im Zusammenhang mit Lignocellulosen entfaltet. Insbesondere wurde dies bei so hergestellten Faserplatten festgestellt. Dies auch über einen weiten Bereich, etwa von 0,2 bis 0,6 % Hydrophobierungsmittel bezogen auf die Trockenmasse Lignocellulosen, ohne dass die mechanischen Eigenschaften wie insbesondere die Biegefestigkeit oder die Querzugsfestigkeit der genannten Spanplatten, sich merklich ändern.

Diese Aufgabe ist auch beim Gegenstand des Anspruches 8 gelöst, wobei darauf abgestellt ist, dass das Hydrophobierungsmittel FT-Paraffin ist. Überraschend hat sich gezeigt, dass FT-Paraffin eine sehr gute Hydrophobierungswirkung in Spanplatten entfaltet. Dies auch über einen weiten Bereich, etwa von 0,2 bis 0,6 % Hydrophobierungsmittel bezogen auf die Trockenmasse der Lignocellulosen. Die mechanischen Eigenschaften wie insbesondere die Biegefestigkeit oder die Querzugsfestigkeit ändern sich über den genannten Bereich nicht merklich. Überraschend wurde festgestellt, dass eine Wechselwirkung mit der Querzugfestigkeit schon bei sehr niedrigen Zugabemengen von FT-Paraffin in dem Sinne einsetzt, dass sie bei einem Bindemittelgehalt, der bei herkömmlichen Paraffinen in der gleichen Menge noch nicht ausreicht, die von der Norm vorgegebene Querzugsfestigkeit zu erreichen, diese bei Zugabe von FT-Paraffin erreichen lässt. Und dies bei einer Zugabe von vergleichsweise sehr geringer Menge an FT-Paraffin. FT-Paraffin kann also als Hydrophobierungsmittel in einem größeren Zugabebereich eingesetzt werden, ohne dass Auswirkungen auf die mechanischen Eigenschaften zu beobachten sind.

Die Tatsache, dass schon bei extrem niedrigen Gehalten an FT-Paraffin eine sehr gute Hydrophobierungswirkung erreicht wird, hat auch unmittelbar zur Folge, dass auch ein sehr viel geringerer Feuchteeintrag im Zuge der Produktion erfolgt. Jedenfalls wenn die übliche Wasser-Emulsionseintragung des Hydrophobierungsmittels angewendet wird. Ein besonderer Aspekt ist auch bei der Einbringung von Paraffin, mit jedenfalls einem Anteil an FT-Paraffin, als Schmelze oder als Dispersion im Refiner oder im Kocher von MDF-Anlagen zu beobachten. Da in dem Kocher oder dem Refiner Temperaturen von 160° bis 180° Celsius herrschen, können leicht flüchtige Bestandteile aus den Paraffinen verdampfen, die eine Störung im Betriebsablauf verursachen können. Um die Flüchtigkeit der Paraffine zu verringern, werden oft Dispersionen mit hohen Anteilen an Isoparaffinen eingesetzt, die einen vergleichsweise hohen Schmelzpunkt haben. Hohe Isoparaffinanteile setzen zwar die Flüchtigkeit herab, haben aber eine ungünstigere Hydrophobierungswirkung als die geradkettigen N-Paraffine. Eine ähnliche Problematik stellt sich auch an den Pressen von Holzspanplatten oder beim Trocknen, wenn mit Formaldehydfängern versehene Wachsdispersionen den nassen Lignocellulosen vor der Trocknung zugegeben werden. Die Verwendung zumindest eines Anteils an FT-Paraffin in der Hydrophobierungsmitteldispersion hat den überraschenden Vorteil, dass die Hydrophobierungswirkung stark verbessert wird, ohne dass die Flüchtigkeit der Paraffine, insbesondere des gegebenenfalls vorhandenen Anteils an aus Gatsche gewonnenem Paraffin, negativ beeinflußt wird. Und ohne dass es erforderlich ist, Paraffin mit einem hohen Isoparaffinanteil einzusetzen.

Die Lignocellulosen können auch mit einem Bindemittel versehen werden.

Besonders bevorzugt ist es, dass das FT-Paraffin mindestens einen Gehalt von 80 % an N-Paraffinen aufweist. Speziell ist ein solcher Anteil von 90 % und mehr sehr förderlich im Rahmen der Erfindung. Soweit eine Mischung aus FT-Paraffin und einem sonstigen Paraffin, insbesondere einem Erdöl-Paraffin (aus Gatsche gewonnenem Paraffin) verwendet wird, ist es bevorzugt, dass der Anteil von FT-Paraffin 50 - 70 % (Volumenprozent) beträgt. Die N-Paraffine in dem FT-Paraffin sollen bevorzugt eine Kettenlänge zwischen C₂₀ und C₃₀ aufweisen. Weiter sieht eine bevorzugte Ausgestaltung des Verfahrens vor, dass die Lignocellulosen mit dem Hydrophobierungsmittel in Form einer Dispersion gemeinsam mit dem Bindemittel versehen werden. Es bedarf nur eines Einbringungsvorganges für das Hydrophobierungsmittel und das Bindemittel. Die Dispersion ist auch bevorzugt anionisch stabilisiert. Auch kann es zweckmäßig sein, die Dispersion mit einem Gemisch aus einem anionischen und einem ionogenen Emulgator zu stabilisieren. Weiter ist bevorzugt, dass die Lignocellulosen mit dem Hydrophobierungsmittel in einem solchen Ausmaß versehen werden, dass sich bezogen auf den Trockenanteil eines Holzwerkstoffes eine Menge von 0,1 bis 1,5 % ergibt. Nicht zuletzt ist auch bevorzugt, dass das Hydrophobierungsmittel den nassen Lignocellulosen vor dem Trocknen zugegeben wird. Die Kettenlänge der im FT-Paraffin vorhandenen N-Paraffine liegt bevorzugt zwischen C₂₀ und C₃₀. Mindestens 50 % der N-Paraffine haben bevorzugt eine Kettenlänge zwischen C₂₅ und C₃₀.

Als Bindemittel kann ein säurehärtendes Harnstoffformaldehydharz verwendet werden. Es kann sich auch um ein alkalisch härtendes Phenolformaldehydharz handeln. Weiter kann das Bindemittel auch alternativ ein Klebstoff auf Basis von PMDI sein oder ein Tanninformaldehydharz.

Die so hergestellten Holzwerkstoffe, insbesondere Spanplatten oder Faserplatten, können thermisch nachbehandelt werden.

Alternativ zu der genannten Dispersion kann das Hydrophobierungsmittel auch in Form einer Schmelze eingebracht werden. Es kann auch teilweise in Form einer Schmelze und teilweise in Form einer Dispersion in die Lignocellulosen eingebracht werden. Nicht zuletzt kann das Hydrophobierungsmittel auch einen Formaldehydfänger wie Harnstoff enthalten.

Wie bereits angesprochen, kann das Hydrophobierungsmittel auch aus einer Mischung aus FT-Paraffin mit aus Gatsche gewonnenem Paraffin bestehen. Hierbei ist der beobachtete Abfall der Biegefestigkeit hin zu kleineren Anteilsmengen aus Gatsche gewonnenem Paraffin, wenn dieses alleine eingesetzt wird, wesentlich abgeschwächt. Versuche haben beispielsweise gezeigt, dass bei einem Anteil von aus Gatsche gewonnenem Paraffin von 0,5 % bezogen auf die Trockenmasse Holzfasern etwa eine Biegefestigkeit von 40 N/mm² erreicht wurde, dagegen bei einem Einsatz von nur noch 0,25 % eine solche von rund 27 N/mm². Dagegen wurde bei einem Einsatz von reinem FT-Paraffin in beiden Fälle eine Biegefestigkeit von rund 38,5 N/mm² gemessen.

Setzt man nun eine Mischung aus Gatsche gewonnenem Paraffin und FT-Paraffin ein, so ist der beobachtete Abfall bei einem Anteil des Paraffin-Gemisches von 0,25 Massenprozent an der Trockenmasse nur noch vergleichsweise gering, nämlich im Bereich von 10% bezogen auf einen Anteil von 0,5 Massenprozent aus Gatsche gewonnenem Paraffin an der Trockenmasse Holzfasern. Überraschend ist weiter, dass bei Verwendung einer solchen Mischung als Hydrophobierungsmittel die Flüchtigkeit des Paraffin-Hydrophobierungsmittels insgesamt nicht nachteilig beeinflußt wird. Erste vorliegende Erkenntnisse deuten sogar auf eine die Flüchtigkeit dämpfende Wechselwirkung hin.

Soweit es sich bei dem Holzwerkstoff um mehrschichtige Spanplatten handelt, ist eine bevorzugte Ausführungsform auch darin zu sehen, dass das einen Anteil an FT-Paraffin aufweisende Hydrophobierungsmittel nur in den Deckschichten einer solchen merhschichtigen Spanplatte eingesetzt ist. Alternativ kann das genannte Hydrophobierungsmittel auch nur in den Mittelschichten einer solchen mehrschichtigen Spanplatte eingesetzt sein.

In weiterer Einzelheit konnte beobachtet werden, dass das FT-Paraffin auch eine gewisse Wechselwirkung mit dem Bindemittel einnimmt. Bei höheren Anteilen von FT-Paraffin kann auf einen gewissen Anteil Bindemittel verzichtet werden. Gleichwohl lassen sich die gleichen geforderten mechanischen Eigenschaften erreichen.

In dieser Beziehung schlägt die Erfindung auch vor, dass das Bindemittel in einer Menge vorgesehen ist, die ohne den auch FT-Paraffin umfassenden Paraffin-Anteil nicht die geforderten Festigkeitswerte erbringt.

Folgende Beispiele werden angeführt:

Es wurden Holzfaserplatten, wie nachstehend angegeben, hergestellt:

| | |
|---|---|
| Plattenaufbau | einschichtig |
| Soll-Rohdichte | 780 kg/m³ |
| Plattenformat | 450 mm x 450 mm (unbesäumt), 410 mm x 410 mm (besäumt) |
| Plattendicke | 19 mm ungeschliffen, 18 mm geschliffen |
| Bindemittel | MUF-Harz BASF K 407 (enthält 3 % Melamin bez. auf Festharz) |
| Bindemittelaufwand | 12 % (Festharz/atro Fasern) |
| Härter | Ammoniumsulfat (40 %ige Lösung) |
| Härtemenge | 2,0 % Ammoniumsulfat (fest bez. auf Festharz) |

Ein Teil der Platten wurde mit aus Gatsche gewonnenem Paraffin hydrophobiert. Der andere Teil der Platten mit einem Fischer-Tropsch-Paraffin (FT-Paraffin) eines Schmelzpunktes von 55°C.

Weiter wurde als Vergleichsplatte eine wie vorstehend angegebene Holzfaserplatte ohne Hydrophobierungsmittel untersucht.

Bei den Holzfaserplatten mit Hydrophobierungsmittel wurde einmal 0,25 % bezogen auf den Trockenanteil Holzfasern (Massenprozent) an Hydrophobierungmittel eingesetzt und zum Weiteren 0,5 %.

Die erzielten Ergebnisse sind in den Figuren, welche jeweils grafische Darstellungen sind, wiedergegeben. Hierbei zeigt:
- Fig. 1: die Dickenquellung in Prozent nach einer Lagerung unter Wasser von 2 bzw. 24 Stunden der jeweiligen Holzfaserplatten;
- Fig. 2: die Wasseraufnahme in Prozent nach einer Lagerung unter Wasser von 2 bzw. 24 Stunden;
- Fig. 3: die Biegefestigkeit in N/mm² bei den einzelnen unterschiedlichen Holzfaserplatten; und
- Fig. 4: die Querzugsfestigkeit bei den unterschiedlichen Holzfaserplatten.

Aus den Paraffinen wurde für den Einsatz als Hydrophobierungsmittel jeweils eine Paraffin-Dispersion hergestellt. Als Dispergierungsmittel wurde ein anionisches Dispergierungsmittel (Type Hoe S 1724 der Fa. Hoechst) verwendet. 300 g des Paraffins wurden jeweils zusammen mit 14,4 g des Dispergierungsmittels bis zum vollständigen Schmelzen erhitzt. Diese Schmelze wurde anschließend in eine Mischung aus 450 g heißem Wasser und 7,4 g 25 %ige Ammoniak-Lösung eingerührt. Hieraus wurde eine Aufschlämmung erhalten, die in einem Labor-Homogenisator in fünf Durchläufen bei einem Druck von 200 bar dispergiert wurde.

Ausgangsrohstoff für die Faserplatte war ein industriell hergestellter thermomechanischer Faserstoff (TMP). Es handelte sich hierbei um einen Faserstoff-Gemisch aus Fichte und Kiefer. Der Faserstoffaufschluss erfolgte bei einer durchschnittlichen Temperatur von 180° C. Zur Gewinnung des Faserstoffs wurde dieser aus dem laufenden Produktionsprozess ausgeschleust. Vor der Verarbeitung erfolgte eine Trocknung auf eine durchschnittliche Feuchte von 5 %.

Zur Herstellung der mit einem Hydrophobierungsmittel versehenen Faserplatten wurde zuerst die Paraffin-Dispersion auf den Faserstoff gesprüht. Anschließend wurde der Faserstoff mit einem handelsüblichen melaminverstärkten Harnstoff-Formaldehydharz (MUF-Harz BASF K 407) beleimt, zu einem Faserstoffkuchen von 45 cm x 45 cm gestreut und zu 19 mm dicken Faserplatten verpresst. Es wurden Distanzleisten verwendet. Die Bedingungen zur Herstellung der MUF-Harz-gebundenen Faserplatten sind im Übrigen oben zusammenfassend angegeben worden.

Nach dem Pressen wurden die Platten auf eine durchschnittliche Dicke von 18 mm geschliffen und besäumt. Danach wurden die Faserplatten über einen Zeitraum von 4 Wochen im Normalklima (20° C und 65 % relative Luftfeuchtigkeit) gelagert. Aus den so gelagerten Faserplatten wurden Prüfkörper entsprechend den jeweiligen Prüfnormen ausgeformt. Anschließend erfolgte die Ermittlung des Feuchtegehalts, der Dickenquellung, der Wasseraufnahme, der Biegefestigkeit sowie der Querzugsfestigkeit der Faserplatten.

Nach 4-wöchiger Lagerung unter 20° C und 65 % relativer Luftfeuchtigkeit ergab sich für die Faserplatte ohne Hydrophobierungsmittel eine relative Feuchtigkeit von 6 %, für die Faserplatte mit Gatsch-Paraffin eine solche von 6,1 % (bei 0,25 % Paraffin bezogen auf Atro-Faserstoff) bzw. von 6,0 % bei 0,5 % Paraffin.

Für die mit FT-Paraffin hydrophobierten Faserplatten ergaben sich Werte von 5,9 % Feuchtegehalt (bezogen auf 0,25 % Hydrophobierungsmittel) bzw. 5,8 % (bezogen auf 0,5 % Hydrophobierungsmittel).

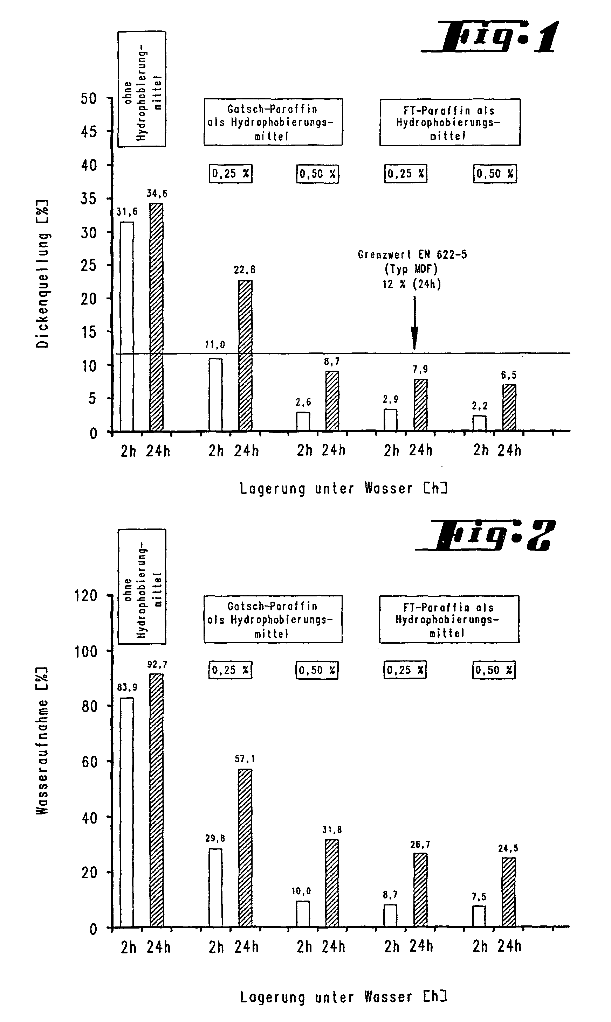

Fig. 1 zeigt grafisch die Ergebnisse der Dickenquellung nach 2 Stunden bzw. 24 Stunden. Der Grenzwert gemäß der Vorschrift EN 622-5 (Typ-MDF) ist mit eingezeichnet.

Die Dickenquellung der Faserplatte ohne Hydrophobierungsmittel lag nach 2-bzw. 24-stündiger Lagerung unter Wasser bei 31,6 % bzw. 34,6 %. Durch Einsatz von 0,25 % Hydrophobierungsmittel des Gatsch-Paraffins reduzierte sich die Dickenquellung auf 11 % (2h) bzw. 22,8 % (24h). Bei der Faserplatte mit 0,5 % bezogen auf Atro-Faserstoffe wurden entsprechend Dickenquellungswerte von 2,6 % (2h) bzw. 8,7 (24h) ermittelt.

Bei der Verwendung von FT-Paraffin als Hydrophobierungsmittel, zu einem Anteil von 0,25 % bezogen auf Atro-Faserstoff, ergab sich nach 2 Stunden eine Dickenquellung von 2,9 % und nach 24 Stunden von 7,9 %. Bei einem Anteil von FT-Paraffin als Hydrophobierungsmittel von 0,5 % bezogen auf Atro-Faserstoff ergab sich eine Dickenquellung von 2, 2 % nach 2 Stunden und 6,5 % nach 24 Stunden.

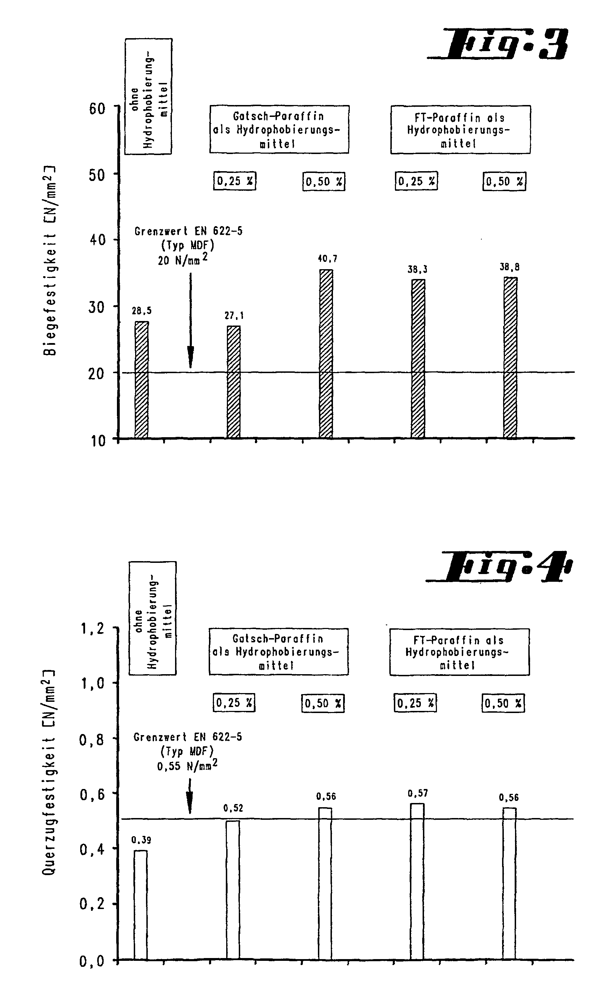

In Fig. 2 ist die durchschnittliche Wasseraufnahme der MUF-Harz-gebundenen Faserplatten dargestellt. Die Faserplatten ohne Hydrophobierungsmittel zeigten nach 2 Stunden eine Wasseraufnahme von 83,9 % und nach 24 Stunden eine solche von 92,7 %. Bei Einsatz eines Hydrophobierungsmittels aus Gatsch-Paraffin in einem Anteil von 0,25 % bezogen auf Atro-Faserstoff wurde nach 2 Stunden eine Wasseraufnahme von 29,8 % und nach 24 Stunden eine solche von 57,1 % festgestellt. Bei einem Anteil von 0,5 % bezogen auf Atro-Faserstoff, des Gatsch-Paraffins, ergab sich ein Wert von 10,0 % nach 2 Stunden und von 31,8 % nach 24 Stunden.

Bei den Faserplatten mit FT-Paraffin als Hydrophobierungsmittel ergab sich bei einem Anteil des Hydrophobierungsmittel von 0,25 % bezogen auf Atro-Faserstoff ein Wert von 8,7 % nach 2 Stunden und einen Wert von 26,7 % nach 24 Stunden Lagerung unter Wasser.

Eine Erhöhung des FT-Paraffin-Hydrophobierungsmittels auf 0,5 % Atro-Faserstoff ergab nach einer Lagerung von 2 Stunden unter Wasser einen Wert von 7,5 % und nach einer Lagerung von 24 Stunden unter Wasser einen Wert von 24,5 %.

In Fig. 3 sind die Biegefestigkeitswerte der ohne bzw. mit unterschiedlichen Hydrophobierungsmitteln ausgerüsteten Faserplatten dargestellt. Die Mindestanforderung gemäß Norm EN 622-5, die bei 20 N/mm² liegt, ist als durchgehende Linie eingetragen.

Für die Faserplatte ohne Hydrophobierungsmittel ergab sich eine Biegefestigkeit von 28,5 N/mm².

Bei der Faserplatte mit Gatsch-Paraffin als Hydrophobierungsmittel ergab sich, zunächst bei einem Anteil von 0,25 % Atro-Faserstoff, ein Wert von 27,1 N/mm² und sodann für einen Anteil von 0,5 % Atro-Faserstoff desselben Paraffins ein Wert von 40,7 N/mm².

Bei der Faserplatte mit FT-Paraffin als Hydrophobierungsmittel ergab sich bei einem Anteil dieses Hydrophobierungsmittels von 0,25 % Atro-Faserstoff ein Wert von 38, 3 N/mm². Bei der Faserplatte mit demselben Hydrophobierungsmittel, jedoch zu einem Anteil von 0,5 % Atro-Faserstoff, ergab sich ein Wert von 38,8 N/mm².

In Fig. 4 ist die Querzugsfestigkeit der untersuchten Faserplatten grafisch dargestellt. Der durch die Norm EN 622-5 vorgegebene Grenzwert von 0,55 N/mm² ist wiederum als durchgehende Linie eingetragen.

Für die Faserplatte ohne Hydrophobierungsmittel ergab sich ein Wert von 0,39 N/mm² Qurerzugsfestigkeit.

Für die Faserplatte mit Gatsch-Paraffin als Hydrophobierungsmittel ergab sich bei einem Anteil von 0,25 % Atro-Faserstoff dieses Hydrophobierungsmittels eine Querzugsfestigkeit von 0,52 N/mm² und bei einem Anteil von 0,5 % Atro-Faserstoff ein Wert von 0,56 N/mm².

Bei der Verwendung von FT-Paraffin als Hydrophobierungsmittel ergab sich hierfür bei einem Anteil von 0,25 % Hydrophobierungsmittel bezogen auf Atro-Faserstoff ein Wert von 0,57 N/mm² und bei einem Anteil von 0,5 % dieses Hydrophobierungsmittels ein Wert von 0,56 N/mm².

## Patentansprüche

1. Verfahren zur Hydrophobierung von Lignocellulosen, insbesondere Holzfasern, Holzspänen und/oder Strands, bei der Herstellung von Holzwerkstoffen, wobei die Lignocellulosen mit einem Hydrophobierungsmittel auf Paraffinbasis versehen werden und danach, gegebenenfalls nach einem Trocknungsvorgang, zu einem Holzwerkstoff zusammengepreßt werden, **dadurch gekennzeichnet, dass** als Hydrophobierungsmittel zumindest teilweise FT-Paraffin verwendet wird.

2. Verfahren nach Anspruch 1 **dadurch gekennzeichnet, dass** die Lignocellulosen mit einem Bindemittel versehen werden.

3. Verfahren nach einem oder mehreren der vorhergehenden Ansprüche **dadurch gekennzeichnet, dass** das FT-Paraffin mindestens einen Gehalt von 80 % an N-Paraffin aufweist.

4. Verfahren nach einem oder mehreren der vorhergehenden Ansprüche **dadurch gekennzeichnet, dass** das Hydrophobierungsmittel einen Anteil von 50 - 70 % an FT-Paraffin aufweist.

5. Verfahren nach einem oder mehreren der vorhergehenden Ansprüche **dadurch gekennzeichnet, dass** die N-Paraffine eine Kettenlänge zwischen C₂₀ und C₃₀ aufweisen, bevorzugt zwischen C₂₅ und C₃₀.

6. Verfahren nach einem oder mehreren der vorhergehenden Ansprüche **dadurch gekennzeichnet, dass** die Lignocellulosen mit dem Hydrophobierungsmittel in Form einer Dispersion gemeinsam mit dem Bindemittel versehen werden.

7. Verfahren nach einem oder mehreren der vorhergehenden Ansprüche **dadurch gekennzeichnet, dass** die Dispersion anionisch stabilisiert ist.

8. Verfahren nach einem oder mehreren der vorhergehenden Ansprüche **dadurch gekennzeichnet, dass** die Lignocellulosen mit dem Hydrophobierungsmittel in einem solchen Ausmaß versehen werden, dass sich bezogen auf den Trockenanteil der Lignocellulosen eine Menge von 0,1 bis 1,5 % ergibt.

9. Verfahren nach einem oder mehreren der vorhergehenden Ansprüche **dadurch gekennzeichnet, dass** das FT-Paraffin zu einem teilweisen Ersatz von Bindemittel verwendet wird.

10. Holzwerkstoff, bestehend aus Lignocellulosen wie insbesondere Holzfasern, Holzspänen und/oder Strands, vorzugsweise Holzfaserplatte wie mitteldichte Faserplatte (MDF), wobei der Holzwerkstoff zur Hydrophobierung einen Anteil an Paraffin aufweist, **dadurch gekennzeichnet, dass** das Paraffin FT-Paraffin ist.

11. Holzwerkstoff nach Anspruch 10 **dadurch gekennzeichnet, dass** zum Zusammenhalt der Lignocellulosen ein Anteil an Bindemittel vorgesehen ist.

12. Holzwerkstoff nach einem der Ansprüche 10 oder 11 **dadurch gekennzeichnet, dass** das FT-Paraffin bezogen auf den Trocken-Anteil an Lignocellulosen in einer Menge von mehr als 0,1 Massenprozent vorgesehen ist.

13. Holzwerkstoff nach einem der Ansprüche 10 bis 12 **dadurch gekennzeichnet, dass** das Bindemittel und das FT-Paraffin zusammengefasst bezogen auf den Trocken-Anteil an Lignocellulosen in einer Menge von weniger als 15 % vorgesehen sind.

14. Holzwerkstoff nach einem der vorhergehenden Ansprüche 11 bis 13 in Form einer Holzfaserplatte, **dadurch gekennzeichnet, dass** das Bindemittel in einer Menge vorgesehen ist, die ohne den auch FT-Paraffin umfassenden Paraffin-Anteil nicht die geforderten Festigkeitswerte erbringt.

15. Holzwerkstoff nach einem der vorhergehenden Ansprüche 11 bis 14 in Form einer Holzfaserplatte, **dadurch gekennzeichnet, dass** das Bindemittel in einer Menge vorgesehen ist, die ohne den Paraffin-Anteil nicht die geforderte Biegefestigkeit um mindestens 40 % übertrifft.

16. Holzwerkstoff nach einem der vorhergehenden Ansprüche 11 bis 13 in Form einer Holzfaserplatte, **dadurch gekennzeichnet, dass** das Bindemittel in einer solchen Menge vorgesehen ist, dass ohne den Paraffinanteil die geforderte Querzugsfestigkeit um mehr als 10% unterschritten ist.

17. Holzwerkstoff nach Anspruch 16 in Form einer Holzfaserplatte, **dadurch gekennzeichnet, dass** das Bindemittel in einer solchen Menge vorgesehen ist, dass ohne den Paraffinanteil die geforderte Querzugsfestigkeit um mehr als 15 % unterschritten ist.

## Claims

1. Process for hydrophobing lignocelluloses, in particular wood fibres, wood chips and/or strands, in the production of derived timber products, wherein the lignocelluloses are provided with a hydrophobing agent based on paraffin and then, optionally after a drying process, are compacted to form a derived timber product, **characterised in that** FT paraffin is used at least partly as hydrophobing agent.

2. Process according to claim 1, **characterised in that** the lignocelluloses are provided with a binder.

3. Process according to one or more of the preceding claims, **characterised in that** the FT paraffin contains at least 80% of N paraffin.

4. Process according to one or more of the preceding claims, **characterised in that** the hydrophobing agent has a proportion of 50 - 70% of FT paraffin.

5. Process according to one or more of the preceding claims, **characterised in that** the N paraffins have a chain length between C₂₀ and C₃₀, preferably between C₂₅ and C₃₀.

6. Process according to one or more of the preceding claims, **characterised in that** the lignocelluloses are provided with the hydrophobing agent in the form of a dispersion together with the binder.

7. Process according to one or more of the preceding claims, **characterised in that** the dispersion is anionically stabilised.

8. Process according to one or more of the preceding claims, **characterised in that** the lignocelluloses are provided with the hydrophobing agent to such an extent that a quantity of 0.1 to 1.5 % is produced based on the dry proportion of the lignocelluloses.

9. Process according to one or more of the preceding claims, **characterised in that** the FT paraffin is used as a partial replacement for binder.

10. Derived timber product, consisting of lignocelluloses, such as in particular wood fibres, wood chips and/or strands, preferably wood-fibre board, such as medium density fibreboard (MDF), wherein the derived timber product has a proportion of paraffm for hydrophobing, **characterised in that** the paraffin is FT paraffin.

11. Derived timber product according to claim 10, **characterised in that** a proportion of binder is provided for holding together the lignocelluloses.

12. Derived timber product according to one of claims 10 or 11, **characterised in that** the FT paraffin is provided in a quantity of more than 0.1 per cent by weight based on the dry proportion of lignocelluloses.

13. Derived timber product according to one of claims 10 to 12, **characterised in that** the binder and the FT paraffin collectively are provided in a quantity of less than 15 % based on the dry proportion of lignocelluloses.

14. Derived timber product according to one of the preceding claims 11 to 13 in the form of a wood-fibre board, **characterised in that** the binder is provided in a quantity which does not yield the required strength values without the paraffin proportion also comprising FT paraffin.

15. Derived timber product according to one of the preceding claims 11 to 14 in the form of a wood-fibre board, **characterised in that** the binder is provided in a quantity which does not exceed the required bending strength by at least 40 % without the paraffin proportion.

16. Derived timber product according to one of the preceding claims 11 to 13 in the form of a wood-fibre board, **characterised in that** the binder is provided in a quantity such that the required transverse tensile strength falls short by more than 10 % without the paraffin proportion.

17. Derived timber product according to claim 16 in the form of a wood-fibre board, **characterised in that** the binder is provided in a quantity such that the required transverse tensile strength falls short by more than 15 % without the paraffin proportion.

## Revendications

1. Procédé d'imperméabilisation de lignocelluloses, en particulier de fibres de bois, copeaux de bois et/ou fils de base, lors de la fabrication de matériaux à base de bois, dans lequel les lignocelluloses sont additionnées d'un agent d'imperméabilisation à base de paraffine et sont ensuite comprimées conjointement, le cas échéant après une opération de séchage, en un matériau à base de bois, **caractérisé en ce que** l'on utilise au moins partiellement la paraffine FT comme agent d'imperméabilisation.

2. Procédé selon la revendication 1, **caractérisé en ce que** les lignocelluloses sont additionnées d'un agent liant.

3. Procédé selon une ou plusieurs des revendications précédentes, **caractérisé en ce que** la paraffine FT présente une teneur d'au moins 80 % en N-paraffme.

4. Procédé selon une ou plusieurs des revendications précédentes, **caractérisé en ce que** l'agent d'imperméabilisation contient une proportion de 50 à 70 % en paraffine FT.

5. Procédé selon une ou plusieurs des revendications précédentes, **caractérisé en ce que** les N-paraffines présentent une longueur de chaîne entre C₂₀ et C₃₀, de préférence entre C₂₅ et C₃₀.

6. Procédé selon une ou plusieurs des revendications précédentes, **caractérisé en ce que** les lignocelluloses sont additionnées d'un agent d'imperméabilisation sous forme d'une dispersion avec le liant.

7. Procédé selon une ou plusieurs des revendications précédentes, **caractérisé en ce que** la dispersion est stabilisée anioniquement.

8. Procédé selon une ou plusieurs des revendications précédentes, **caractérisé en ce que** les lignocelluloses sont additionnées de l'agent d'imperméabilisation en une proportion correspondant à une quantité de 0,1 à 1,5 % sur la base de la partie sèche des lignocelluloses.

9. Procédé selon une ou plusieurs des revendications précédentes, **caractérisé en ce que** la paraffine FT est utilisée comme matière de substitution partielle du liant.

10. Matériau à base de bois, constitué de lignocelluloses comme en particulier de fibres de bois, de copeaux de bois et/ou des fils de bois, de préférence de panneaux de fibres de bois comme des panneaux de fibre de densité moyenne (PFDM), où le matériau à base de bois présente pour l'imperméabilisation une proportion de paraffine, **caractérisé en ce que** la paraffine est la paraffine FT.

11. Matériau à base de bois selon la revendication 10, **caractérisé en ce que**, pour maintenir ensemble les lignocelluloses, une proportion de liant est prévue.

12. Matériau à base de bois selon l'une des revendications 10 ou 11, **caractérisé en ce que** la paraffine FT est apportée en une quantité de plus de 0,1 % en poids sur la base de la partie sèche de lignocelluloses.

13. Matériau à base de bois selon l'une des revendications 10 à 12, **caractérisé en ce que** le liant et la paraffine FT sont apportés, pris ensemble, en une quantité de moins de 15 % sur la base de à la partie sèche de lignocelluloses.

14. Matériau à base de bois selon l'une des revendications 11 à 13 sous la forme d'un panneau de fibres de bois, **caractérisé en ce que** le liant est apporté en une quantité qui ne conduit pas aux valeurs de résistance recherchées en l'absence de la proportion de paraffine comportant la paraffine FT.

15. Matériau à base de bois selon l'une des revendications 11 à 14 sous la forme d'un panneau de fibres de bois, **caractérisé en ce que** le liant est apporté en une quantité telle que, sans la proportion de paraffine, la résistance à la flexion est en deçà d'au moins 40 % de la valeur recherchée.

16. Matériau à base de bois selon l'une des revendications 11 à 13 sous la forme d'un panneau de fibres de bois, **caractérisé en ce que** le liant est apporté en une quantité telle que, sans la proportion de paraffine, la résistance à la traction transversale recherchée est abaissée de plus de 10 %.

17. Matériau à base de bois selon la revendication 16 sous la forme d'un panneau de fibres de bois, **caractérisé en ce que** le liant est apporté en une quantité telle que, sans la proportion de paraffine, la résistance à la traction transversale recherchée est abaissée de plus de 15 %.
